# EUROPEAN PATENT SPECIFICATION

(11) **EP 2 599 670 B1**
(45) Date of publication and mention of the grant of the patent: **02.10.2013**
(21) Application number: 11191124.4
(22) Date of filing: 29.11.2011
(51) Int. Cl.: B60R 21/36

(54) **A pedestrian airbag arrangement**
Fußgänger-Airbaganordnung
Agencement d'airbag pour piétons

(43) Date of publication of application: 05.06.2013
(73) Proprietor: Autoliv Development AB, 447 83 Vårgårda (SE)
(72) Inventor: Lindberg, Ken, 441 46 Alingsås (SE); Östling, Martin, 50733 Brämhult (SE)
(74) Representative: Parry, Simon James

(56) References cited:
- EP-A2- 1 369 317
- DE-A1- 10 014 510
- US-A1- 2003 192 730
- US-A1- 2008 185 823

## Description

The present invention relates to a pedestrian airbag arrangement, and more particularly relates to a pedestrian airbag arrangement on a motor vehicle having a windscreen.

When a motor vehicle is involved in a frontal impact with a pedestrian, it is common for the body of the pedestrian to strike the windscreen of the vehicle which can result in serious injury to the pedestrian, and significant damage to the vehicle. In an attempt to alleviate this, it has been proposed to provide a motor vehicle with a so-called pedestrian airbag which, if vehicle sensors indicate that a collision with a pedestrian is occurring or is likely to occur, inflates to cover a central portion of the windscreen, and/or the left and right A-pillars of the vehicle. Typically, an airbag of this general type is provided in an initially tightly folded and/or rolled package and is stored beneath a rear part of the vehicle's hood or bonnet, or beneath a cowl which is provided between the base of the windscreen and the rear part of the hood or bonnet. The rear of the hood or bonnet may be lifted by a suitable air-bag, piston or other arrangement to allow sufficient space for the pedestrian airbag to inflate so that it deploys in a manner effective to cover at least part of the windscreen and/or A-pillars of the vehicle, thereby cushioning the impact of a pedestrian with these parts of the vehicle. Alternatively, it is also possible to configure the pedestrian airbag such that as it begins inflation it performs the hood-lifting function itself. Such an arrangement may incorporate a cell structure to the pedestrian airbag beneath the hood, or may comprise a structure adjacent the airbag to guide the airbag for inflation in a direction effective to lift the rear part of the hood or bonnet.

As will be appreciated, however, space beneath the rear part of a vehicle's hood or bonnet can be very limited which makes it difficult to conveniently package a sufficiently large airbag to ensure adequate protection for a pedestrian. Also, the larger the airbag which is successfully packaged in such an arrangement, then the larger the volume of gas required to inflate the airbag (which also necessitates a larger inflator). Relying on a large volume of gas to inflate a pedestrian airbag generally results in a slower deployment time which can adversely affect the effectiveness of the airbag in preventing or reducing injuries to a pedestrian, see for example US-A-2008/0 185 823.

It is a preferred object of the present invention to provide an improved pedestrian airbag arrangement.

According to the present invention, there is provided a pedestrian airbag arrangement on a motor vehicle having a windscreen, the arrangement comprising an airbag having an inflatable volume for the receipt of inflating gas, in that said inflatable volume of the airbag comprising a primary chamber configured for inflation upon deployment of the airbag so as to extend over or across at least part of the windscreen; and a plurality of secondary chambers, each said secondary chamber being configured for inflation upon deployment of the airbag so as to adopt a respective deployed position between the primary chamber and the windscreen, to thereby space the primary chamber from the windscreen, wherein said primary chamber is sub-divided into a plurality of inflatable cells in fluid communication with one another, and each said secondary chamber is provided in fluid communication with at least one of said cells.

Preferably, the respective deployed positions of said secondary chambers are spaced apart from one another.

Advantageously, the deployed positions of the secondary chambers are spaced apart from one another in a transverse direction across the vehicle.

Conveniently, said primary chamber and each said secondary chamber are formed from flexible material, and wherein the material forming each said secondary chamber is connected to the material forming the primary chamber.

Preferably, said flexible material is fabric and the fabric forming each said secondary chamber is stitched to the fabric forming the primary chamber.

Advantageously, said secondary chambers are formed integrally with the primary chamber.

Conveniently, the airbag is formed from fabric material, and the secondary chambers and the primary chamber are formed integrally via a one-piece weaving technique.

Preferably, part of each secondary chamber is defined by a respective region of flexible material defining the primary chamber.

Advantageously, each said secondary chamber is provided in fluid communication with said primary chamber.

Preferably, said fluid communication is provided by at least one aperture formed in the primary chamber.

Conveniently, the arrangement further comprises an inflator arranged to direct a volume of inflating gas into said primary chamber upon actuation, wherein each said secondary chamber is arranged for inflation via a flow of said inflating gas from said primary chamber.

Preferably, the inflatable volume of each said secondary chamber is smaller than the inflatable volume of said primary chamber.

Advantageously, the total inflatable volume of said secondary chambers is smaller than the inflatable volume of said primary chamber.

Conveniently, said primary chamber and each said secondary chamber have a substantially elongate configuration when inflated, and wherein the deployed position of each said secondary chamber is generally orthogonal to the inflated position of the primary chamber.

Preferably, said primary chamber has a generally elongate and arcuate configuration when inflated, and each secondary chamber has a substantially elongate configuration when inflated, the deployed positions of the secondary chambers each being generally orthogonal to the respective adjacent regions of the primary chamber.

Advantageously, each said secondary chamber is connected along substantially its entire length to the primary chamber.

Conveniently, each said secondary chamber has an inflated configuration in which it presents a curved outer surface towards the windscreen of the vehicle.

So that the invention may be more readily understood, and so that further features thereof may be appreciated, embodiments of the invention will now be described by way of example with reference to the accompanying drawings in which:
Figure 1 is a plan view showing an initial stage in the production of a pedestrian airbag embodying the present invention, illustrating two superimposed sheets of flexible material;
Figure 2 is a view corresponding generally to that of figure 1, showing the sheets connected around their peripheral edges to define a primary inflatable chamber;
Figure 3 is a plan view showing further pieces of flexible material used in the construction of the airbag;
Figure 4 is a perspective view showing the pieces of fabric illustrated in figure 3 connected together to form another part of the airbag;
Figure 5 is a perspective view showing a number of parts of the type illustrated in figure 4 connected to the primary inflatable chamber illustrated in figure 2, so as to define respective secondary inflatable chambers of the airbag;
Figure 6 is a perspective view showing the airbag of figure 5 in a deployed position across the windscreen of a motor vehicle;
Figure 7 is a cross-sectional view taken along line VII-VII in figure 6, showing the cross-sectional configuration of the inflated airbag relative to the windscreen of the vehicle;
Figure 8 is a perspective view similar to that of figure 5, but which shows an alternative configuration of airbag embodying the present invention;
Figure 9 is a perspective view of the airbag illustrated in figure 8, showing the airbag as viewed from the rear and below; and
Figure 10 is a cross-sectional view taken along line X-X in figure 8, showing the cross-sectional configuration of the airbag.

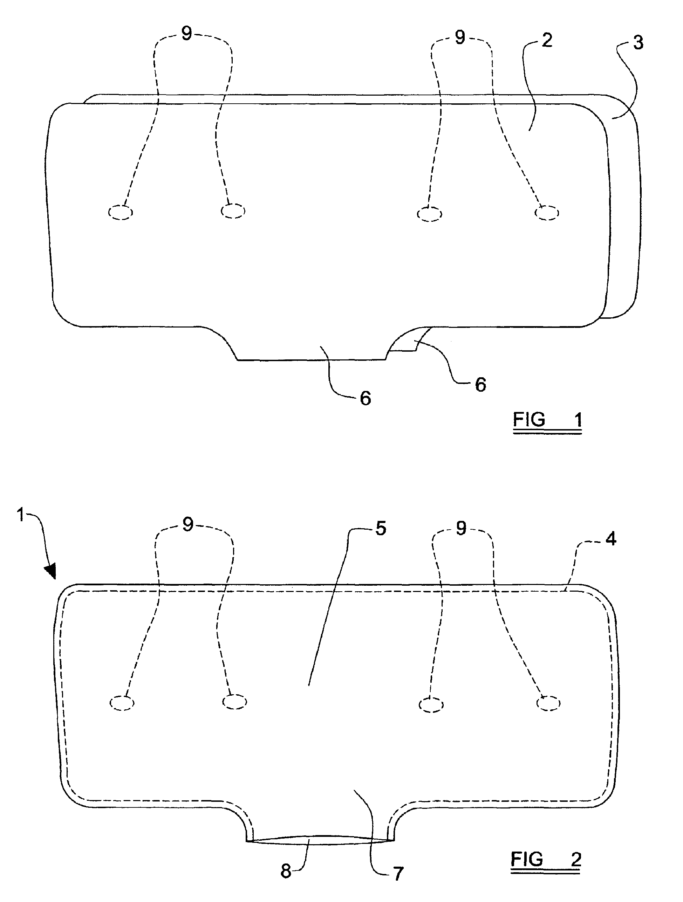

Referring initially to figures 1 to 5, the construction and resulting configuration of a simple form of pedestrian airbag in accordance with the invention will be described.

Figure 1 shows a pair substantially identical sheets 2, 3 of flexible material from which the pedestrian airbag 1 is produced. The sheets 2, 3 are preferably formed from woven fabric material and in the embodiment illustrated are both generally rectangular. The sheets 2, 3 are shown in figure 1 in superimposed relation to one another. As shown in figure 2, the two sheets 2, 3 are interconnected along substantially the entire extent of their peripheral edges by a peripheral seam 4 to define a primary inflatable chamber 5 between the sheets for the receipt of inflating gas. The primary chamber 5 is elongate and generally rectangular.

As will be noted, each sheet 2, 3 is provided with an outwardly projecting tab 6 at a generally central position along one of its long sides. The two tabs 6 are aligned when the sheets are superimposed, and the peripheral seam 4 connecting the two sheets begins at one end of the aligned tabs 6, runs around the periphery of the rectangular sheets, and terminates at the opposite end of the aligned tabs 6. The tabs 6 are thus unconnected along their length and so cooperate to form a neck 7 to the airbag, the neck defining a gas inlet aperture 8 to the airbag. The neck 7 is intended to be fitted to an inflator such as a gas generator in a known manner, such that upon actuation of the inflator, a large volume of inflating gas will be directed into the interior volume of the primary inflatable chamber 5, thereby inflating the airbag 1.

It is to be noted, however, that the lower of the two fabric sheets 3 illustrated in figures 1 and 2 is provided with a plurality of apertures 9. The apertures 9 are spaced-apart from one another along the length of the sheet 3, and each defines a respective gas flow port, the purpose of which will be described in more detail below.

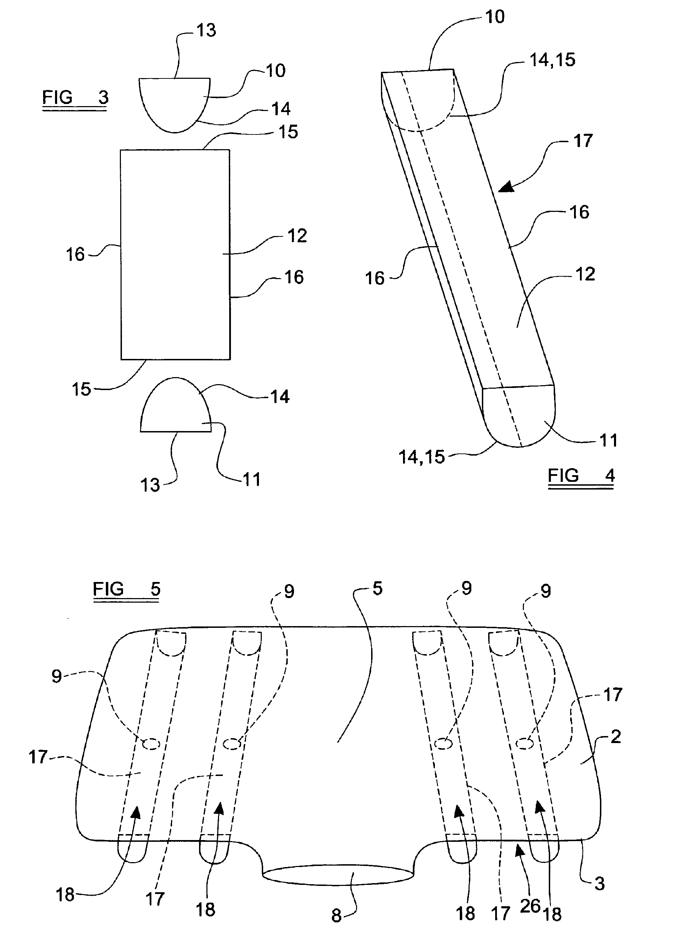

Turning now to consider figure 3, there are shown three pieces of flexible material 10,11,12 which are used to form a secondary inflatable chamber to the airbag 1. In preferred embodiments the three pieces 10,11,12 are formed of the same type of woven fabric as the two sheets 2, 3 used to define the primary chamber 5 of the airbag. As will be noted, two of the pieces of fabric 10,11 are generally n- or u-shaped and thus each has a relatively short straight edge 13 and a relatively long arcuate edge 14. The other piece of fabric 12 is generally rectangular in shape and thus has a pair of relatively short edges 15 and a pair of relatively long edges 16. The short edges 15 of the rectangular fabric piece 12 are approximately equal in length to the arcuate edges 14 of the other two fabric pieces 10,11.

As illustrated in figure 4, each short edge 15 of the rectangular fabric piece 12 is connected along its length to a respective arcuate edge 14 of the other pieces 10,11 to form an elongate open-topped channel 17 which is closed at each end by a respective one of the smaller fabric pieces 10,11. By virtue of the interconnection of each arcuate edge 14 of the smaller fabric pieces 10,11 with the short edges 15 of the rectangular piece, the undersurface of the channel 17 is arcuate.

In the embodiment illustrated in figures 1 to 7 of the drawings, four generally identical open-topped fabric channels 17 are formed in the manner described above.

Turning now to consider figure 5, the primary inflatable chamber 5 of figure 2 is shown in perspective view. As illustrated, the four open-topped channels 17 are arranged beneath the primary chamber 5 in spaced-apart and generally parallel relationship to one another. More particularly, it will be noted that the channels are spaced apart along the length of the primary chamber 5, with each channel 17 being positioned against the rear sheet 3 of the primary chamber so as to cover a respective aperture 9 formed through the rear sheet 3. The long edges 16 and the short edges 13 each channel 17 are then connected to the rear sheet 3, for example via stitching.

It is therefore to be appreciated that when each channel 17 is connected to the rear sheet 3 of the primary chamber 5 as described above and as shown in figure 5, the channels 17 cooperate with respective regions of the rear sheet 3 to define respective secondary chambers 18. The apertures 9 formed in the rear sheet 3 each define flow ports between the primary chamber 5 and the secondary chambers 18, and thus provide fluid communication between the inflatable volume of primary chamber 5 and the secondary chambers 18.

The airbag 1 is initially provided in a tightly packed package (not shown) under a rear part of the hood or bonnet 19 of a motor vehicle 20, at a position immediately in front of the vehicle's windscreen 21. More particularly, the airbag 1 will be fluidly connected, via its neck 7 and associated inlet aperture 8, to an inflator 22 such as a gas generator mounted beneath the rear part of the hood or bonnet 8.

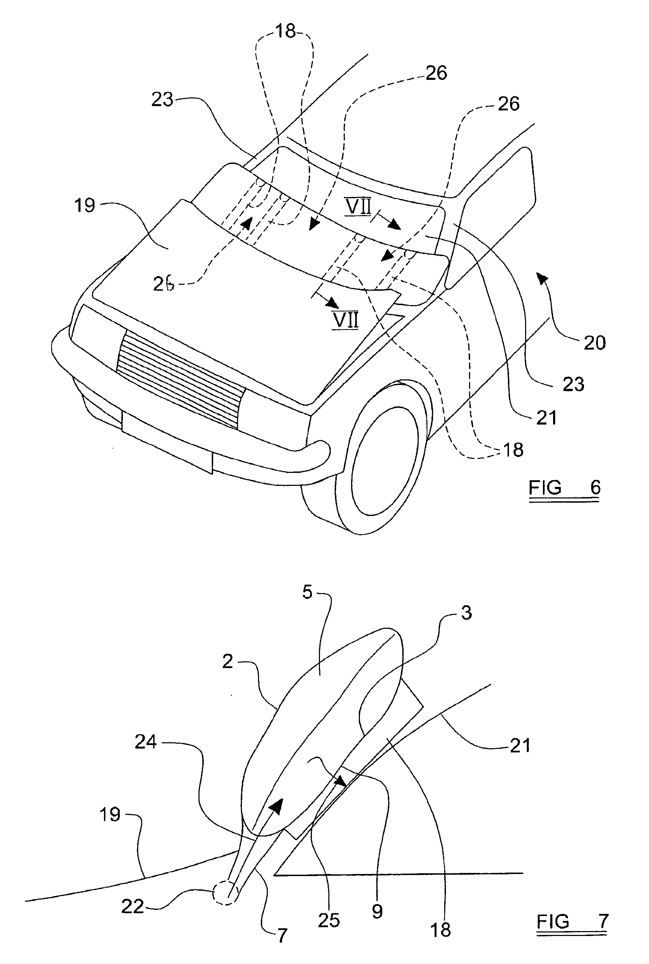

Figures 6 and 7 illustrate a motor vehicle 20 fitted with a pedestrian airbag 1 in accordance with the embodiment described above, and show the airbag 1 in an inflated condition following actuation of the inflator 22. The rear of the hood or bonnet 19 is lifted, for example by another air-bag, a piston or other lifting arrangement, to allow sufficient space for the pedestrian airbag 1 to inflate so that it deploys in a manner effective to cover at least part of the windscreen 21 and the adjacent A-pillars 23 of the vehicle, thereby cushioning the impact of a pedestrian with these parts of the vehicle.

More particularly, having regard to figure 7, it should be noted that upon initial actuation of the inflator 22, a large volume of inflating gas is directed at high speed through the neck 7 and into the primary chamber 5 defined between the main front and rear fabric sheets 2, 3 of the airbag, as illustrated schematically by arrow 24. This flow of gas serves to rapidly inflate the primary chamber 5 of the airbag 1, thereby ensuring that the airbag 1 deploys quickly from its initial packed configuration so as to extend generally across the windscreen 21 of the vehicle 20, as illustrated in figure 6.

As the primary chamber 5 reaches substantially complete inflation, secondary flows of the inflating gas occur through the flow ports 9 in the rear sheet 3 of the primary chamber 5, and thus into the secondary chambers 18 as illustrated schematically by arrow 25, thereby inflating the secondary chambers 18 such that they adopt their elongate inflated configurations as illustrated in figures 5-7.

As shown particularly in figure 6, in their inflated and deployed positions, the secondary chambers 18 are spaced apart from one another in a transverse direction across the vehicle. More particularly, it will be noted that the deployed positions of the secondary chambers 18 are generally parallel to one another and orthogonal to the length of the primary chamber 5.

Furthermore, as shown in figure 7, the secondary chambers 18 inflate so as to adopt deployed positions between the primary chamber 5 of the airbag 1 and the windscreen 21 of the vehicle, and thus serve to space the rear sheet 3 of the primary chamber 5 from the windscreen, creating cavities 26 between the primary chamber 5 and the windscreen, each cavity 26 being formed between adjacent secondary chambers 18. The curved lower surface of each secondary chamber 18 is arranged to bear against the windscreen or the adjacent structure of the vehicle. Each secondary chamber 18 can be considered to represent a "fender" in its inflated configuration, effective to space the primary chamber 5 from the windscreen, thereby improving the cushioning properties of the primary chamber.

It has been found that the above-mentioned inflation characteristic in which the primary chamber 5 of the airbag is spaced from the windscreen 21 of the vehicle by the cavities 26 between adjacent secondary chambers 18, significantly improves the protection afforded to the head of a pedestrian striking the airbag 1. It is thought that this improvement in the level of protection results from the increase in distance through which energy can be absorbed by the airbag 1 for a given total inflatable volume of the entire airbag. The provision of the secondary chambers 18, which inflate upon deployment of the airbag to form "fenders" spacing the larger primary chamber 5 of the airbag from the windscreen 21, allows the total inflatable volume of the entire airbag 1 to be reduced compared to prior art arrangements without any reduction in the level of impact protection provided to the head or torso of a pedestrian impacting the bag.

Whilst the invention has been described above with reference to a specific embodiment, it is to be appreciated that various modifications or alterations could be made to the airbag arrangement without departing from the scope of the claimed invention. For example, although the embodiment illustrated in figures 1 to 7 has been described above as comprising secondary chambers 18 which are formed from separate pieces of fabric 10, 11, 12 which are stitched together and then also stitched to the rear sheet 3 of the primary chamber 5, it is envisaged that in variants of the invention the secondary chambers 18 could each be formed integrally with the primary chamber 5. For example, it is proposed that the primary and secondary chambers could be woven simultaneously via a so-called "one-piece weaving" technique of a type known *per se*. In such an arrangement it is envisaged that the fabric pieces defining the secondary chambers 18 would be woven simultaneously with the fabric sheets defining the primary chamber 5, with the warp and weft yarns forming the pieces and sheets being interwoven in selected areas to form integral interconnecting seams between the secondary chambers 18 and the primary chamber 5.

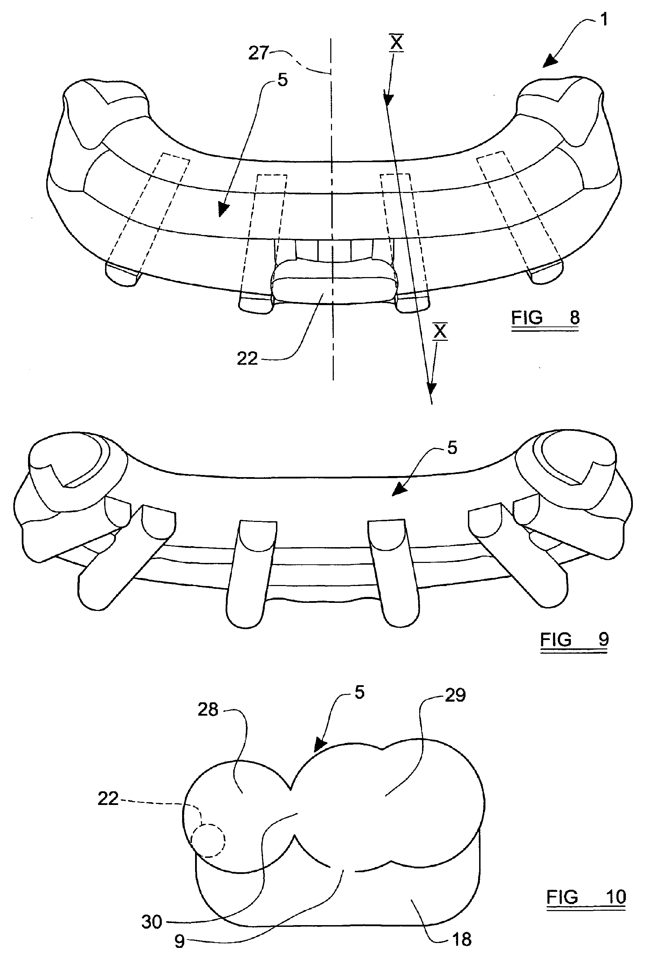

Figures 8 to 10 illustrate schematically airbag embodiment in accordance with the present invention, which in many respects is similar to the simple arrangement described above and illustrated in figures 1 to 7. A principle difference between the arrangement of figures 8 to 10 and the arrangement of figures 1 to 7 is that the arrangement shown in figures 8 to 10 has a more intricately shaped primary chamber 5. In particular, it will be noted that the primary chamber 5 has a generally arcuate configuration as viewed from above in figure 8. Furthermore, it will be noted that there are a total of six secondary chambers 18 provided in this modified embodiment, with the secondary chambers 18 no longer being parallel to one another in their elongate and inflated configuration as illustrated. More particularly, the secondary chambers 18 are arranged relative to one another in their inflated positions such that they converge towards the transverse axis 27 of the airbag 1 (which will be generally coincident with the longitudinal axis of the vehicle upon deployment) in a rearward direction away from the inflator 22 (which in this arrangement is proposed to be provided inside the primary chamber 5. Nevertheless, because of the arcuate configuration of the primary chamber 5, each secondary chamber 18 is still generally orthogonal to the respective part of the elongate primary chamber 5 to which it is attached or formed.

The other main difference between the arrangement of figures 8 to 10 and the arrangement of figures 1 to 7, is that in the arrangement of figures 8 to 10 the primary chamber 5 is sub-divided into a plurality of inflatable cells as illustrated most clearly in the sectional view of figure 10. In the particular arrangement illustrated, the primary chamber 5 is sub-divided into two such cells, namely a forwardly positioned cell 28 and a rearwardly positioned cell 29. The two cells are each generally elongate and either connected to one another or formed integrally with one another (for example via a "one-piece weaving" technique) such that both will extend generally transversely across the windscreen of a motor vehicle upon deployment. The two cells 28, 29 are provided in fluid communication with one another, for example via a narrow flow passage 30 which can extend along a significant length of the primary chamber. As will be noted, in this arrangement, the secondary chambers 18 are each provided in fluid communication with the primary chamber 5 via respective flow ports 9 in the undersurface of the rearward inflatable cell 29.

In other respects, the modified arrangement of figures 8 to 10 will operate in a similar manner to the arrangement of figures 1 to 7, particularly as regards inflation of the secondary chambers 18 so as to adopt respective deployed positions between the primary chamber and the windscreen of a motor vehicle, to thereby space the primary chamber from the windscreen.

## Claims

1. A pedestrian airbag arrangement on a motor vehicle (20) having a windscreen (21), the arrangement comprising an airbag (1) having an inflatable volume for the receipt of inflating gas, said inflatable volume of the airbag (1) comprising a primary chamber (5) configured for inflation upon deployment of the airbag so as to extend over or across at least part of the windscreen (21); and a plurality of secondary chambers (18), each said secondary chamber (18) being configured for inflation upon deployment of the airbag so as to adopt a respective deployed position between the primary chamber (5) and the windscreen (21), to thereby space the primary chamber (5) from the windscreen (21), the arrangement being **characterised in that** said primary chamber (5) is sub-divided into a plurality of inflatable cells (28,29) in fluid communication (30) with one another, and each said secondary chamber (18) is provided in fluid communication (9) with at least one of said cells (29).

2. A pedestrian airbag arrangement according to claim 1, wherein the deployed positions of the secondary chambers (18) are spaced apart from one another in a transverse direction across the vehicle (20).

3. A pedestrian airbag arrangement according to any preceding claim, wherein said primary chamber (5) and each said secondary chamber (18) are formed from flexible material (2,3,10,11,12), and wherein the material (10,11,12) forming each said secondary chamber (18) is connected to the material (3) forming the primary chamber (5).

4. A pedestrian airbag arrangement according to claim 3, wherein said flexible material (2,3,10,11,12) is fabric and the fabric (10,11,12) forming each said secondary chamber (18) is stitched to the fabric (3) forming the primary chamber (5).

5. A pedestrian airbag arrangement according to claim 1 or claim 2, wherein said secondary chambers (18) are formed integrally with the primary chamber (5).

6. A pedestrian airbag arrangement according to claim 5, wherein the airbag is formed from fabric material, the secondary chambers (18) and the primary chamber (5) being formed integrally via a one-piece weaving technique.

7. A pedestrian airbag arrangement according to any preceding claim, wherein each said secondary chamber (18) is provided in fluid communication (9) with said primary chamber (5).

8. A pedestrian airbag arrangement according to claim 7, further comprising an inflator (22) arranged to direct a volume of inflating gas (24) into said primary chamber (5) upon actuation, wherein each said secondary chamber (18) is arranged for inflation via a flow of said inflating gas (25) from said primary chamber (5).

9. A pedestrian airbag arrangement according to any preceding claim, wherein the inflatable volume of each said secondary chamber (18) is smaller than the inflatable volume of said primary chamber (5).

10. A pedestrian airbag arrangement according to any preceding claim, wherein the total inflatable volume of said secondary chambers (18) is smaller than the inflatable volume of said primary chamber (5).

11. A pedestrian airbag arrangement according to any preceding claim, wherein said primary chamber (5) and each said secondary chamber (18) have a substantially elongate configuration when inflated, and wherein the deployed position of each said secondary chamber (18) is generally orthogonal to the inflated position of the primary chamber (5).

12. A pedestrian airbag arrangement according to any one of claims 1 to 10, wherein said primary chamber (5) has a generally elongate and arcuate configuration when inflated, and each secondary chamber (18) has a substantially elongate configuration when inflated, the deployed positions of the secondary chambers (18) each being generally orthogonal to the respective adjacent regions of the primary chamber (5).

13. A pedestrian airbag arrangement according to claim 11 or claim 12, wherein each said secondary chamber (18) is connected along substantially its entire length to the primary chamber (5).

14. A pedestrian airbag arrangement according to any preceding claim, wherein each said secondary chamber (18) has an inflated configuration in which it presents a curved outer surface towards the windscreen (21) of the vehicle (20).

## Patentansprüche

1. Fußgänger-Airbaganordnung an einem Motorfahrzeug (20), das eine Windschutzscheibe (21) aufweist, wobei die Anordnung einen Airbag (1) umfasst, der ein aufblasbares Volumen für die Aufnahme von Aufblasgas aufweist, wobei das aufblasbare Volumen des Airbags (1) eine Primärkammer (5), die zur Aufblasung auf eine Entfaltung des Airbags hin ausgelegt ist, um sich so über zumindest einen oder quer zu zumindest einem Teil der Windschutzscheibe (21) zu erstrecken; und eine Mehrzahl von Sekundärkammern (18) umfasst, wobei jede Sekundärkammer (18) zur Aufblasung auf eine Entfaltung des Airbags hin ausgelegt ist, um so eine jeweilige entfaltete Position zwischen der Primärkammer (5) und der Windschutzscheibe (21) einzunehmen, um dadurch die Primärkammer (5) von der Windschutzscheibe (21) zu beabstanden, wobei die Anordnung **dadurch gekennzeichnet ist, dass** die Primärkammer (5) in eine Mehrzahl von aufblasbaren Zellen (28, 29) in einer Fluidverbindung (30) miteinander unterteilt ist, und jede Sekundärkammer (18) in Fluidverbindung (9) mit zumindest einer der Zellen (29) bereitgestellt ist.

2. Fußgänger-Airbaganordnung nach Anspruch 1, wobei die entfalteten Positionen der Sekundärkammern (18) voneinander in einer transversalen Richtung über das Fahrzeug (20) beabstandet sind.

3. Fußgänger-Airbaganordnung nach einem vorhergehenden Anspruch, wobei die Primärkammer (5) und jede Sekundärkammer (18) aus einem flexiblen Material (2, 3, 10, 11, 12) gebildet sind, und wobei das Material (10, 11, 12), das jede Sekundärkammer (18) bildet, mit dem Material (3), das die Primärkammer (5) bildet, verbunden ist.

4. Fußgänger-Airbaganordnung nach Anspruch 3, wobei das flexible Material (2, 3, 10, 11, 12) Gewebe ist und das Gewebe (10, 11, 12), das jede Sekundärkammer (18) bildet, an das Gewebe (3), das die Primärkammer (5) bildet, genäht ist.

5. Fußgänger-Airbaganordnung nach Anspruch 1 oder Anspruch 2, wobei die Sekundärkammern (18) integral mit der Primärkammer (5) gebildet sind.

6. Fußgänger-Airbaganordnung nach Anspruch 5, wobei der Airbag aus Gewebematerial gebildet ist, wobei die Sekundärkammern (18) und die Primärkammer (5) integral über eine einstückige Webetechnik gebildet sind.

7. Fußgänger-Airbaganordnung nach einem vorhergehenden Anspruch, wobei jede Sekundärkammer (18) in einer Fluidverbindung (9) mit der Primärkammer (5) bereitgestellt ist.

8. Fußgänger-Airbaganordnung nach Anspruch 7, ferner umfassend einen Gasgenerator (22), der so angeordnet ist, dass er auf eine Auslösung hin ein Volumen von Aufblasgas (24) in die Primärkammer (5) leitet, wobei jede Sekundärkammer (18) zum Aufblasen über einen Strom des Aufblasgases (25) von der Primärkammer (5) angeordnet ist.

9. Fußgänger-Airbaganordnung nach einem vorhergehenden Anspruch, wobei das aufblasbare Volumen jeder Sekundärkammer (18) kleiner als das aufblasbare Volumen der Primärkammer (5) ist.

10. Fußgänger-Airbaganordnung nach einem vorhergehenden Anspruch, wobei das aufblasbare Gesamtvolumen der Sekundärkammern (18) kleiner als das aufblasbare Volumen der Primärkammer (5) ist.

11. Fußgänger-Airbaganordnung nach einem vorhergehenden Anspruch, wobei die Primärkammer (5) und jede Sekundärkammer (18) eine im Wesentlichen längliche Konfiguration aufweisen, wenn sie aufgeblasen sind, und wobei die entfaltete Position jeder Sekundärkammer (18) im Allgemeinen orthogonal zu der aufgeblasenen Position der Primärkammer (5) ist.

12. Fußgänger-Airbaganordnung nach einem der Ansprüche 1 bis 10, wobei die Primärkammer (5) eine im Allgemeinen längliche und gekrümmte Konfiguration aufweist, wenn sie aufgeblasen ist, und jede Sekundärkammer (18) eine im Wesentlichen längliche Konfiguration aufweist, wenn sie aufgeblasen ist, wobei die entfalteten Positionen der Sekundärkammern (18) im Allgemeinen orthogonal zu den jeweiligen benachbarten Regionen der Primärkammer (5) sind.

13. Fußgänger-Airbaganordnung nach Anspruch 11 oder 12, wobei jede Sekundärkammer (18) entlang im Wesentlichen ihrer gesamten Länge mit der Primärkammer (5) verbunden ist.

14. Fußgänger-Airbaganordnung nach einem vorhergehenden Anspruch, wobei jede Sekundärkammer (18) eine aufgeblasene Konfiguration aufweist, in welcher sie eine gekrümmte äußere Fläche zu der Windschutzscheibe (21) des Fahrzeugs (20) hin darstellt.

## Revendications

1. Agencement d'airbag pour piétons sur un véhicule à moteur (20) équipé d'un pare-brise (21), ledit agencement comprenant un airbag (1) qui possède un volume gonflable destiné à recevoir un gaz de gonflement, ledit volume gonflable de l'airbag (1) comprenant une chambre primaire (5) configurée pour se gonfler lors du déploiement de l'airbag de manière à s'étendre sur ou en travers d'une partie au moins du pare-brise (21) ; et une pluralité de chambres secondaires (18) dont chacune est configurée pour se gonfler lors du déploiement de l'airbag de manière à adopter une position déployée respective entre la chambre primaire (5) et le pare-brise (21) afin d'espacer ainsi la chambre primaire (5) du pare-brise (21), l'agencement étant **caractérisé en ce que** ladite chambre primaire (5) est subdivisée en une pluralité de cellules gonflables (28, 29) en communication fluidique (30) les unes avec les autres et **en ce que** chacune desdites chambres secondaires (18) est disposée en communication fluidique (9) avec l'une au moins desdites cellules (29).

2. Agencement d'airbag pour piétons selon la revendication 1, dans lequel les positions déployées des chambres secondaires (18) sont espacées les unes des autres dans une direction transversale du véhicule (20).

3. Agencement d'airbag pour piétons selon l'une quelconque des revendications précédentes, dans lequel ladite chambre primaire (5) et chacune desdites chambres secondaires (18) sont formées à partir d'un matériau flexible (2, 3, 10, 11, 12) et dans lequel le matériau (10, 11, 12) formant chacune desdites chambres secondaires (18) est relié au matériau (3) formant la chambre primaire (5).

4. Agencement d'airbag pour piétons selon la revendication 3, dans lequel ledit matériau flexible (2, 3, 10, 11, 12) est un tissu et le tissu (10, 11, 12) formant chacune desdites chambres secondaires (18) est cousu au tissu (3) formant la chambre primaire (5).

5. Agencement d'airbag pour piétons selon la revendication 1 ou la revendication 2, dans lequel lesdites chambres secondaires (18) sont formées d'un seul tenant avec la chambre primaire (5).

6. Agencement d'airbag pour piétons selon la revendication 5, dans lequel l'airbag est formé à partir d'un matériau en tissu, les chambres secondaires (18) et la chambre primaire (5) étant formées d'un seul tenant par une technique de tissage d'une seule pièce.

7. Agencement d'airbag pour piétons selon l'une quelconque des revendications précédentes, dans lequel chacune desdites chambres secondaires (18) est disposée en communication fluidique (9) avec ladite chambre primaire (5).

8. Agencement d'airbag pour piétons selon la revendication 7, comprenant en outre un gonfleur (22) agencé de manière à diriger un volume de gaz de gonflement (24) dans ladite chambre primaire (5) lorsqu'il est actionné, chacune desdites chambres secondaires (18) étant agencée pour être gonflée par un courant dudit gaz de gonflement (25) venant de ladite chambre primaire (5).

9. Agencement d'airbag pour piétons selon l'une quelconque des revendications précédentes, dans lequel le volume gonflable de chacune desdites chambres secondaires (18) est plus petit que le volume gonflable de ladite chambre primaire (5).

10. Agencement d'airbag pour piétons selon l'une quelconque des revendications précédentes, dans lequel le volume gonflable total desdites chambres secondaires (18) est plus petit que le volume gonflable de ladite chambre primaire (5).

11. Agencement d'airbag pour piétons selon l'une quelconque des revendications précédentes, dans lequel ladite chambre primaire (5) et chacune desdites chambres secondaires (18) ont une configuration sensiblement allongée lorsqu'elles sont gonflées et dans lequel la position déployée de chacune desdites chambres secondaires (18) est généralement orthogonale à la position gonflée de la chambre primaire (5).

12. Agencement d'airbag pour piétons selon l'une quelconque des revendications 1 à 10, dans lequel ladite chambre primaire (5) a une configuration généralement allongée et incurvée lorsqu'elle est gonflée et chaque chambre secondaire (18) a une configuration sensiblement allongée lorsqu'elle est gonflée, les positions déployées des chambres secondaires (18) étant chacune généralement orthogonales aux régions adjacentes respectives de la chambre primaire (5).

13. Agencement d'airbag pour piétons selon la revendication 11 ou la revendication 12, dans lequel chacune desdites chambres secondaires (18) est reliée sensiblement sur toute sa longueur à la chambre primaire (5).

14. Agencement d'airbag pour piétons selon l'une quelconque des revendications précédentes, dans lequel chacune desdites chambres secondaires (18) a une configuration gonflée dans laquelle elle présente une surface extérieure incurvée en direction du pare-brise (21) du véhicule (20).
